# EUROPÄISCHE PATENTSCHRIFT

(11) **EP 2 703 725 B1**
(45) Veröffentlichungstag und Bekanntmachung des Hinweises auf die Patenterteilung: **27.04.2016**
(21) Anmeldenummer: 13181270.3
(22) Anmeldetag: 22.08.2013
(51) Int. Cl.: F24C 7/08, F24C 15/10, H05B 6/12

(54) **Kochfeldvorrichtung**
Hotplate device
Dispositif de champ de cuisson

(30) Priorität: 03.09.2012 ES 201231362
(43) Veröffentlichungstag der Anmeldung: 05.03.2014
(73) Patentinhaber: BSH Hausgeräte GmbH, 81739 München (DE)
(72) Erfinder: Dionisio Micolau, Diego, 50013 Zaragoza (ES); Garcia Herrer, Antonio José, 50018 Zaragoza (ES); Martinez Bermejo, Armando, 50820 San Juan de Mozarrifar (ES)

(56) Entgegenhaltungen:
- EP-A1- 2 475 220
- EP-A2- 2 040 004
- EP-A2- 2 427 032
- DE-A1-102007 032 762
- US-A1- 2008 185 376
- US-A1- 2010 237 064

## Beschreibung

Die Erfindung geht aus von einer Kochfeldvorrichtung nach dem Oberbegriff des Anspruchs 1.

Die DE 101 63 839 B4 offenbart eine Kochfeldvorrichtung mit einer Halteeinheit zu einer Halterung zumindest einer Heizeinheit und einer Trägereinheit, die zu einer Halterung zumindest einer Elektronikeinheit vorgesehen ist und die gleichzeitig eine untere Abdeckeinheit eines Kochfelds bildet.

Aus der europäischen Patentanmeldung EP 2 040 004 A2 ist eine Kochfeldvorrichtung bekannt, bei welcher drei Heizeinheiten an einer Kochfeldplatte befestigt sind. Für jede der Heizeinheiten ist jeweils eine Anzeigeeinheit vorgesehen. Diese drei Anzeigeeinheiten sind an Rändern der Kochfeldplatte derart befestigt, dass ein Symmetriezentrum einer Anzeigeeinheit und ein Symmetriezentrum der entsprechenden Heizeinheit in einer Linie angeordnet sind, die parallel zu einer Seitenkante der Kochfeldplatte verläuft.

Die Aufgabe der Erfindung besteht insbesondere darin, eine gattungsgemäße Kochfeldvorrichtung vorteilhaft weiterzuentwickeln. Die Aufgabe wird erfindungsgemäß durch die kennzeichnenden Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung mit einer Kochfeldplatte, mit wenigstens einer in einem montierten Zustand an der Kochfeldplatte unmittelbar befestigten Halteeinheit und mit zumindest einer Heizeinheit, welche in einer Einbaulage von der Halteeinheit getragen und im montierten Zustand zwischen der Kochfeldplatte und zumindest einem Teil der Halteeinheit angeordnet ist.

Es wird vorgeschlagen, dass die Halteeinheit zumindest eine seitliche Ausnehmung zu einer Montage und/oder Demontage der Heizeinheit aufweist. Unter einem "montierten Zustand" soll hier und im Folgenden insbesondere ein montierter Zustand eines die Kochfeldvorrichtung aufweisenden Kochfelds verstanden werden. Unter einer "Einbaulage" soll insbesondere eine in einem Betriebszustand durch das die Kochfeldvorrichtung aufweisende Kochfeld eingenommene Orientierung relativ zu einer Schwerkraftrichtung an einem Einbauort verstanden werden. Unter "vorgesehen" soll insbesondere speziell ausgebildet und/oder ausgestattet verständen werden. Unter einer "Kochfeldplatte" soll in diesem Zusammenhang insbesondere ein plattenartiges Bauelement verstanden werden, welches in der Einbaulage des Kochfelds horizontal angeordnet und zu einem Aufstellen von Gargeschirr zu Garzwecken vorgesehen ist. Vorzugsweise besteht die Kochfeldplatte zumindest teilweise und besonders vorteilhaft zu einem Großteil aus einer Glaskeramik. Darunter, dass die Kochfeldplatte "zu einem Großteil" aus einer Glaskeramik besteht, soll insbesondere verstanden werden, dass die Kochfeldplatte mit einem Massenanteil von wenigstens 60 %, insbesondere von zumindest 70 %, vorzugsweise von mindestens 80 % und besonders vorteilhaft von wenigstens 90 % aus einer Glaskeramik besteht. Vorzugsweise umfasst die Heizeinheit wenigstens ein Induktionsheizelement, welches zu einer induktiven Beheizung von auf der Kochfeldplatte aufgestelltem Gargeschirr vorgesehen ist. Unter einer "Halteeinheit" soll in diesem Zusammenhang insbesondere eine wenigstens ein Element umfassende Einheit verstanden werden, welche insbesondere wenigstens einen Anlagebereich zu einer Verbindung mit der Kochfeldplatte aufweist und welche dazu vorgesehen ist, wenigstens eine weitere Baueinheit des Kochfelds und vorzugsweise zumindest einen Großteil der Baueinheiten des Kochfelds zu tragen. Darunter, dass die Halteeinheit dazu vorgesehen ist, "zumindest einen Großteil der Baueinheiten des Kochfelds zu tragen", soll insbesondere verstanden werden, dass die Halteeinheit im montierten Zustand und in der Einbaulage Baueinheiten des Kochfelds trägt, deren Gesamtmasse inklusive der Masse der Halteeinheit wenigstens 55 %, insbesondere zumindest 65 %, vorzugsweise mindestens 75 % und besonders vorteilhaft wenigstens 85 % einer Gesamtmasse des Kochfelds ausmacht. Vorzugsweise ist die Halteeinheit an der Kochfeldplatte angeklebt. Vorzugsweise trägt die Halteeinheit im montierten Zustand in der Einbaulage, von der Kochfeldplatte abgesehen, sämtliche weitere Baueinheiten des Kochfelds. Darunter, dass eine erste Einheit im montierten Zustand in der Einbaulage von einer zweiten Einheit "getragen ist" oder dass eine zweite Einheit im montierten Zustand in der Einbaulage eine erste Einheit "trägt", soll insbesondere verstanden werden, dass in der Einbaulage eine Gewichtskraft der ersten Einheit wenigstens teilweise und vorzugsweise zumindest im Wesentlichen von der zweiten Einheit aufgenommen wird. Darunter, dass die Gewichtskraft der ersten Einheit "zumindest im Wesentlichen" von der zweiten Einheit aufgenommen wird, soll insbesondere verstanden werden, dass wenigstens 75 %, insbesondere zumindest 85 % und vorzugsweise mindestens 95 % der Gewichtskraft der ersten Einheit von der zweiten Einheit aufgenommen wird. Unter einer "Ausnehmung" einer Einheit soll in diesem Zusammenhang insbesondere eine Materialausnehmung in wenigstens einem Element der Einheit und/oder ein freier räumlicher Bereich zwischen wenigstens zwei Elementen der Einheit verstanden werden. Unter einer "seitlichen Ausnehmung" soll insbesondere eine Ausnehmung verstanden werden, welche im montierten Zustand in zumindest einer zur Kochfeldplatte parallelen Richtung durchgehend ist.

Durch eine solche Ausgestaltung kann eine gattungsgemäße Kochfeldvorrichtung vorteilhaft weiterentwickelt werden. Insbesondere können vorteilhaft Kosten gesenkt werden, insbesondere einerseits durch eine Reduzierung einer Bauteileanzahl und andererseits durch eine Vereinfachung einer Montage. Durch die Halteeinheit kann eine zentrale Montageeinheit für sämtliche Komponenten des Kochfelds bereitgestellt werden, wodurch die Montage des Kochfelds erheblich vereinfacht und beschleunigt werden kann. Dabei können die Komponenten des Kochfelds auf beliebige, dem Fachmann als sinnvoll erscheinende Art an der Halteeinheit befestigt sein, insbesondere durch Kleben, Verrasten, Schrauben und/oder Schweißen. Bei entsprechender Wahl von Befestigungsmitteln kann die Montage insbesondere zumindest weitgehend werkzeuglos erfolgen. Durch die seitlichen Ausnehmungen in der Halteeinheit kann des Weiteren ein Wartungs- und/oder Reparaturaufwand reduziert werden, da die Heizeinheit vorteilhaft einfach entnehmbar ist.

Ferner wird vorgeschlagen, dass die Kochfeldvorrichtung zumindest eine von der Halteeinheit verschieden ausgebildete Trägereinheit umfasst, welche zumindest ein Fixierelement umfasst, das im montierten Zustand in der Einbaulage eine Horizontalposition der Heizeinheit relativ zur Halteeinheit zumindest im Wesentlichen festlegt. Unter einer "Trägereinheit" soll in diesem Zusammenhang insbesondere eine Baueinheit verstanden werden, welche insbesondere von einem Element einer Schraub- oder Nietverbindung und/oder einer Heizeinheit des Kochfelds verschieden ausgebildet ist und welche im montierten Zustand in der Einbaulage zumindest eine weitere Einheit des Kochfelds, insbesondere eine Elektronikeinheit, trägt. Darunter, dass das Fixierelement "im montierten Zustand in der Einbaulage eine Horizontalposition der Heizeinheit relativ zur Halteeinheit zumindest im Wesentlichen festlegt", soll insbesondere verstanden werden, dass eine Beweglichkeit der Heizeinheit relativ zur Halteeinheit im montierten Zustand in der Einbaulage durch das Fixierelement in wenigstens einer zur Kochfeldplatte parallelen Richtung zumindest weitgehend aufgehoben ist. Darunter, dass die relative Beweglichkeit im montierten Zustand in der Einbaulage in wenigstens einer zur Kochfeldplatte parallelen Richtung "zumindest weitgehend aufgehoben ist", soll insbesondere verstanden werden, dass eine maximale Relativbewegung zwischen der Heizeinheit und der Halteeinheit im montierten Zustand in der Einbaulage in der zur Kochfeldplatte parallelen Richtung höchstens 5 mm, insbesondere maximal 2,5 mm, vorzugsweise höchstens 1 mm und besonders vorteilhaft maximal 0,5 mm beträgt. Hierdurch kann eine gattungsgemäße Kochfeldvorrichtung vorteilhaft weiterentwickelt werden. Insbesondere kann eine Montage vereinfacht und beschleunigt werden. Ferner kann eine Bauteileanzahl reduziert werden. Insbesondere kann das Fixierelement die Horizontalposition im montierten Zustand in der Einbaulage durch einen Kraft- und/oder Stoffschluss festlegen. Vorzugsweise legt das Fixierelement die Horizontalposition im montierten Zustand in der Einbaulage jedoch durch einen Formschluss fest. Hierdurch kann eine vorteilhaft lösbare Verbindung geschaffen werden.

Vorteilhaft ist die Trägereinheit im montierten Zustand und in der Einbaulage durch die Halteeinheit getragen. Vorteilhaft ist die Trägereinheit im montierten Zustand und in der Einbaulage zumindest im Wesentlichen unter der Halteeinheit angeordnet. Darunter, dass die Trägereinheit im montierten Zustand in der Einbaulage "zumindest im Wesentlichen" unter der Halteeinheit angeordnet ist, soll insbesondere verstanden werden, dass wenigstens 60 %, insbesondere zumindest 70 %, vorzugsweise mindestens 80 % und besonders vorteilhaft wenigstens 90 % einer Gesamtmasse der Trägereinheit im montierten Zustand in der Einbaulage unterhalb der Halteeinheit angeordnet sind. Hierdurch kann eine Bauteileanzahl reduziert werden, da mehrere Aufgaben gleichzeitig von der Halteeinheit wahrgenommen werden können. Ferner kann eine Konstruktion einer gattungsgemäßen Kochfeldvorrichtung vorteilhaft vereinfacht werden.

In einer bevorzugten Ausgestaltung der Erfindung wird vorgeschlagen, dass die Trägereinheit wenigstens einen Montagebereich für zumindest eine Elektronikeinheit umfasst und dazu vorgesehen ist, im montierten Zustand und in der Einbaulage die Elektronikeinheit zu tragen. Unter einem "Montagebereich für zumindest eine Elektronikeinheit" soll insbesondere ein zumindest teilweise an die Trägereinheit angrenzender und/oder wenigstens teilweise von der Trägereinheit umgriffener räumlicher Bereich verstanden werden, in welchem die Elektronikeinheit im montierten Zustand und insbesondere in der Einbaulage angeordnet ist. Insbesondere umfasst die Trägereinheit wenigstens ein Befestigungsmittel, insbesondere ein Rastelement, vorzugsweise einen Rasthaken, und/oder eine Ausnehmung, vorzugsweise ein Gewindeloch, zu einer Fixierung der Elektronikeinheit. Hierdurch kann eine Bauteileanzahl reduziert werden, da mehrere Aufgaben gleichzeitig von der Trägereinheit wahrgenommen werden können. Ferner kann eine Konstruktion einer gattungsgemäßen Kochfeldvorrichtung besonders vorteilhaft vereinfacht werden.

In einer besonders bevorzugten Ausgestaltung der Erfindung wird vorgeschlagen, dass der Montagebereich im montierten Zustand auf einer von der Halteeinheit abgewandten Seite der Trägereinheit angeordnet ist. Hierdurch kann eine Montage vereinfacht werden, insbesondere bei einem Herstellen elektrischer Verbindungen, insbesondere beim Herstellen elektrischer Verbindungen zur Heizeinheit, insbesondere da im montierten Zustand der Elektronikeinheit an der Trägereinheit eine vorteilhafte Zugänglichkeit der Elektronikeinheit erreicht werden kann.

Ferner wird vorgeschlagen, dass die Halteeinheit wenigstens eine im montierten Zustand vom Fixierelement durchstoßene Ausnehmung aufweist. Unter einer im montierten Zustand "vom Fixierelement durchstoßenen Ausnehmung" soll in diesem Zusammenhang insbesondere eine Ausnehmung verstanden werden, durch welche das Fixierelement im montierten Zustand, insbesondere in der Einbaulage, wenigstens teilweise hindurchtritt. Hierdurch kann eine einfache, kostengünstige und effektive Konstruktion bereitgestellt werden.

In einer weiteren Ausgestaltung der Erfindung wird vorgeschlagen, dass die Halteeinheit einstückig ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Hierdurch kann eine Bauteileanzahl reduziert werden. Ferner kann eine Fertigung der Halteeinheit vorteilhaft optimiert werden.

Vorteilhaft ist die Halteeinheit dazu vorgesehen, im montierten Zustand wenigstens ein Bauelement einer Elektronikeinheit elektromagnetisch zumindest weitgehend von der Heizeinheit abzuschirmen. Darunter, dass die Halteeinheit dazu vorgesehen ist, im montierten Zustand das Bauelement "elektromagnetisch zumindest weitgehend von der Heizeinheit abzuschirmen", soll insbesondere verstanden werden, dass ein von der Heizeinheit ausgehendes elektrisches und/oder magnetisches Feld an jedem Ort des Bauelements durch ein Material der Halteeinheit um wenigstens 60 %, insbesondere um zumindest 70 %, vorzugsweise um mindestens 80 % und besonders vorteilhaft um wenigstens 90 % abgeschwächt ist, insbesondere verglichen mit einer imaginären Situation, in welcher bei gleicher relativer Anordnung der Heizeinheit zum Bauelement die Halteeinheit durch Luft ersetzt wird. Vorzugsweise ist das Bauelement als ein Leistungselektronikbauelement, insbesondere ein Wechselrichter, ausgebildet. Hierdurch kann eine Bauteileanzahl besonders vorteilhaft reduziert werden, da die Halteeinheit mehrere Aufgaben in sich vereinen kann und insbesondere zusätzlich eine Abschirmung bereitstellen kann. Ferner kann ein hoher Qualitätsstandard garantiert werden. Vorzugsweise besteht die Halteeinheit zumindest teilweise und vorzugsweise zu einem Großteil aus Aluminium. Darunter, dass die Halteeinheit "zu einem Großteil" aus Aluminium besteht, soll insbesondere verstanden werden, dass die Halteeinheit mit einem Massenanteil von wenigstens 60 %, insbesondere von zumindest 70 %, vorzugsweise von mindestens 80 % und besonders vorteilhaft von wenigstens 90 % aus Aluminium besteht. Hierdurch kann eine leichte Bauweise erreicht werden.

Wenn die Halteeinheit dazu vorgesehen ist, im montierten Zustand und in der Einbaulage eine Kochfeldaußenabdeckung zumindest teilweise zu tragen, kann eine Bauteilevielfalt weiter reduziert werden. Ferner kann eine vorteilhaft einfache Konstruktion erzielt werden. Unter einer "Kochfeldaußenabdeckung" soll in diesem Zusammenhang insbesondere eine, insbesondere von der Trägereinheit verschieden ausgebildete und unterhalb der Kochfeldplatte angeordnete Einheit verstanden werden, welche Komponenten des Kochfelds nach außen hin abdeckt.

Vorteilhaft umfasst die Trägereinheit zumindest ein Elektronikträgerelement zu einer Halterung einer Touch-Elektronikeinheit und wenigstens ein Lager zu einer geführten Bewegung des Elektronikträgerelements. Unter einem "Elektronikträgerelement" soll insbesondere ein Element der Trägereinheit verstanden werden, welches wenigstens ein Befestigungsmittel, insbesondere ein Rastelement, vorzugsweise einen Rasthaken, und/oder eine Ausnehmung, vorzugsweise ein Gewindeloch, zu einer Befestigung der Touch-Elektronikeinheit umfasst. Unter einem "Lager" soll in diesem Zusammenhang insbesondere ein Element zu einem Führen wenigstens zweier gegeneinander beweglicher Bauteile verstanden werden. Unter einer "geführten Bewegung" des Elektronikträgerelements soll insbesondere eine in ihren Freiheitsgraden, insbesondere durch das Lager, eingeschränkte Bewegung des Elektronikträgerelements verstanden werden. Unter einer "Touch-Elektronikeinheit" soll insbesondere eine Elektronikeinheit verstanden werden, welche zumindest einen Berühr- und/oder Annäherungssensor umfasst, welcher vorzugsweise in einem betriebsbereiten Zustand an einer Unterseite der Kochfeldplatte anliegt, so dass insbesondere an einer Oberseite der Kochfeldplatte ein Touch-Bedienfeld gebildet ist. Hierdurch kann eine Montage der Touch-Elektronikeinheit vorteilhaft vereinfacht werden. Vorzugsweise weist das Lager ein Schwenklager auf, welches insbesondere zumindest teilweise als ein Filmscharnier ausgebildet sein kann. Unter einem "Schwenklager" soll in diesem Zusammenhang insbesondere ein Radiallager verstanden werden. Unter einem "Filmscharnier" soll insbesondere ein Scharnier verstanden werden, welches zwei durch das Scharnier verbundene Teile einteilig miteinander verbindet und welches insbesondere zumindest im Wesentlichen aus einer dünnwandigen Verbindung, vorzugsweise in Form eines Falzes, besteht, welche durch ihre Biegsamkeit eine Drehbewegung der verbundenen Teile ermöglicht. Vorzugsweise ist die Trägereinheit in diesem Fall einstückig ausgebildet. Besonders vorteilhaft ist die Trägereinheit aus einem Kunststoff hergestellt. Hierdurch können Kosten reduziert werden. Ferner kann eine Bauteileanzahl verringert werden.

Vorteilhaft ist das Elektronikträgerelement in einer ersten Lagerstellung des Lagers um zumindest im Wesentlichen 180° gegenüber einer zweiten Lagerstellung des Lagers geschwenkt. Darunter, dass das Elektronikträgerelement in der ersten Lagerstellung des Lagers "um zumindest im Wesentlichen 180°" gegenüber einer zweiten Lagerstellung des Lagers geschwenkt ist, soll insbesondere verstanden werden, dass das Elektronikträgerelement in der ersten Lagerstellung des Lagers um einen Winkel zwischen 160° und 200°, insbesondere zwischen 170° und 190°, vorzugsweise zwischen 175° und 185° und besonders vorteilhaft zwischen 178° und 182° gegenüber der zweiten Lagerstellung des Lagers geschwenkt ist. Vorzugsweise sind die erste und die zweite Lagerstellung des Lagers jeweils als eine Endstellung des Lagers ausgebildet. Unter einer "Endstellung" eines Lagers soll insbesondere eine Lagerstellung verstanden werden, welche einer maximalen Auslenkung des Lagers entspricht, wobei die maximale Auslenkung insbesondere durch ein weiteres, vom Lager verschieden ausgebildetes Bauteil definiert sein kann. Vorzugsweise ist die erste Lagerstellung des Lagers zu einer Montage der Touch-Elektronikeinheit am Elektronikträgerelement vorgesehen. Vorzugsweise ist das Elektronikträgerelement dazu vorgesehen, die Touch-Elektronikeinheit in der zweiten Lagersteltung des Lagers in einer Betriebsposition zu halten. Darunter, dass das Elektronikträgerelement dazu vorgesehen ist, "die Touch-Elektronikeinheit in der zweiten Lagerstellung des Lagers in einer Betriebsposition zu halten", soll insbesondere verstanden werden, dass das Elektronikträgerelement den Berühr- und/oder Annäherungssensor der Touch-Elektronikeinheit in der zweiten Lagerstellung gegen die Unterseite der Kochfeldplatte drückt. Hierdurch kann eine besonders bequeme Montage und/oder Justierung der Touch-Elektronikeinheit ermöglicht werden.

Vorteilhaft ist die Trägereinheit wenigstens teilweise als ein Gitter ausgebildet, welches insbesondere zumindest teilweise ein Fachwerk bilden kann. Unter einem "Gitter" soll insbesondere eine Konstruktion aus mehreren geradlinigen und/oder gekrümmten Stäben verstanden werden, welche jeweils an beiden Enden miteinander verbunden sind, insbesondere einstückig, wobei insbesondere jeder Stab Bestandteil wenigstens einer insbesondere allseitig von Stäben umschlossener Gitterzelle ist. Unter einem "Fachwerk" soll in diesem Zusammenhang insbesondere eine Konstruktion aus mehreren Stäben verstanden werden, welche jeweils an beiden Enden miteinander verbunden sind, wobei jeder Stab Bestandteil wenigstens eines dreieckigen Fachs ist. Hierdurch kann unter Beibehaltung einer ausreichenden mechanischen Stabilität Material eingespart werden, wodurch Kosten gesenkt werden können. Ferner kann eine vorteilhafte Steigerung der mechanischen Stabilität ermöglicht werden.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochfeld mit einer Kochfeldvorrichtung in einer Draufsicht,
- Fig. 2: einen Teil der Kochfeldvorrichtung mit einer Kochfeldplatte und einer an der Kochfeldplatte unmittelbar befestigten Halteeinheit in einer isometrischen Darstellung von unten,
- Fig. 3: eine Trägereinheit der Kochfeldvorrichtung mit einem Elektronikträgerelement in einer ersten Lagerstellung in einer isometrischen Darstellung,
- Fig. 4: einen Teil der Kochfeldvorrichtung mit der an der Halteeinheit montierten Trägereinheit, welche mittels eines Fixierelements in der Einbaulage eine Horizontalposition einer Heizeinheit relativ zur Halteeinheit festlegt in einer Teilschnittdarstellung und
- Fig. 5: einen Teil der Trägereinheit mit dem Elektronikträgerelement in einer zweiten Lagerstellung in einer isometrischen Darstellung.

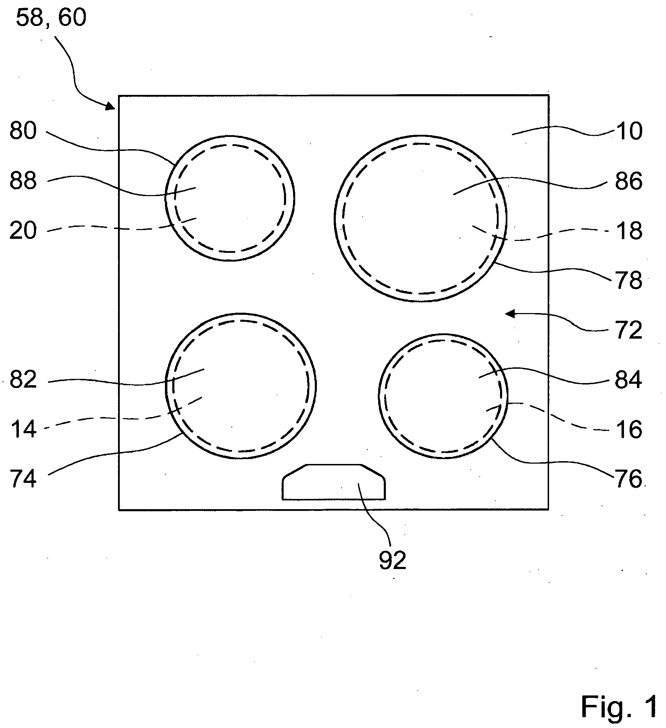

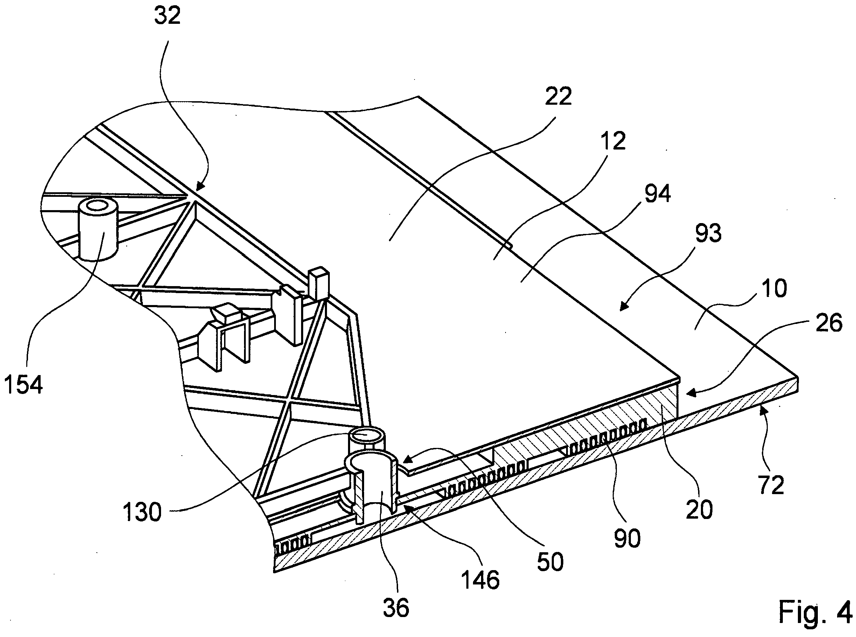

Figur 1 zeigt ein Kochfeld 58 mit einer erfindungsgemäßen Kochfeldvorrichtung in einer Draufsicht. Das Kochfeld 58 ist als ein Induktionskochfeld 60 ausgebildet. Die Kochfeldvorrichtung umfasst eine Köchfeldplatte 10. Die Kochfeldplatte 10 besteht zumindest zu einem Großteil aus einer Glaskeramik. Die Kochfeldplatte 10 ist in einer Einbaulage des Kochfelds 58 horizontal angeordnet und zu einem Aufstellen von Gargeschirr auf eine Oberseite 72 der Kochfeldplatte 10 zu Garzwecken vorgesehen. Die Kochfeldplatte 10 weist Markierungen 74, 76, 78, 80 auf, durch welche Heizzonen 82, 84, 86, 88 gekennzeichnet sind. Jeder der Heizzonen 82, 84, 86, 88 ist unterhalb der Kochfeldplatte 10 eine Heizeinheit 14, '16, 18, 20 der Kochfeldvorrichtung zugeordnet, wobei die Heizeinheiten 14, 16, 18, 20 in Figur 1 gestrichelt angedeutet sind. Die Heizeinheiten 14, 16, 18, 20 umfassen jeweils wenigstens eine Induktorspule 90 (vgl. Figur 4). Ferner weist die Kochfeldplatte 10 Markierungen auf, durch welche Touch-Bedienfelder einer in Figur 1 lediglich schematisch angedeuteten Bedienerschnittstelle 92 der Kochfeldvorrichtung gekennzeichnet sind. Neben den Touch-Bedienfeldern weist die Bedienerschnittstelle 92 zusätzlich wenigstens eine Anzeigeeinheit auf (nicht dargestellt).

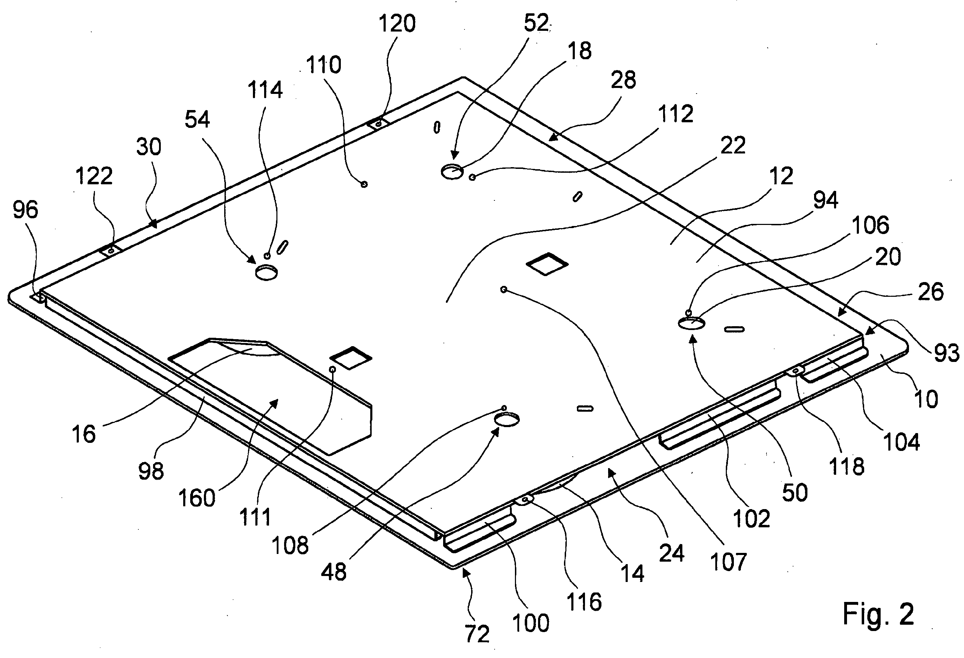

Figur 2 zeigt einen Teil der Kochfeldvorrichtung in einer isometrischen Darstellung von unten. Die Kochfeldvorrichtung umfasst eine Halteeinheit 12. Die Halteeinheit 12 ist in einem montierten Zustand unmittelbar an der Kochfeldplatte 10 befestigt. Die Halteeinheit 12 ist an einer Unterseite 93 der Kochfeldplatte 10 angeklebt. Die Halteeinheit 12 ist einstückig ausgebildet und besteht zumindest zu einem Großteil aus Aluminium. Die Halteeinheit 12 umfasst eine Grundplatte 94 und Seitenwände 96, 98, 100, 102, 104. Die Seitenwände 96, 98, 100, 102, 104 weisen jeweils einen zur Grundplatte 94 zumindest im Wesentlichen senkrechten ersten Bereich auf. Ferner umfassen die Seitenwände 96, 98, 100, 102, 104 jeweils einen zur Grundplatte 94 zumindest im Wesentlichen parallelen zweiten Bereich. Die zweiten Bereiche bilden dabei jeweils eine Klebestelle für eine Klebeverbindung zwischen der Halteeinheit 12 und der Kochfeldplatte 10. Die Halteeinheit 12 ist dazu vorgesehen, die Heizeinheiten 14, 16, 18, 20 im montierten Zustand und in der Einbaulage zu tragen. Dabei sind die Heizeinheiten 14, 16, 18, 20 zwischen der Kochfeldplatte 10 und einem Teil 22 der Halteeinheit 12 angeordnet, und zwar zwischen der Kochfeldplatte 10 und der Grundplatte 94 der Halteeinheit 12. Für jede der Heizeinheiten 14, 16, 18, 20 umfasst die Halteeinheit 12 eine seitliche Ausnehmung 24, 26, 28, 30, wobei in Figur 2 lediglich die seitliche Ausnehmung 24 sichtbar ist. Die seitlichen Ausnehmungen 24, 26, 28, 30 sind jeweils zwischen zwei Seitenwänden 96, 98, 100, 102, 104 der Halteeinheit 12 gebildet. Die seitlichen Ausnehmungen 24, 26, 28, 30 sind jeweils zu einer Montage und/oder Demontage der entsprechenden Heizeinheit 14, 16, 18, 20 vorgesehen.

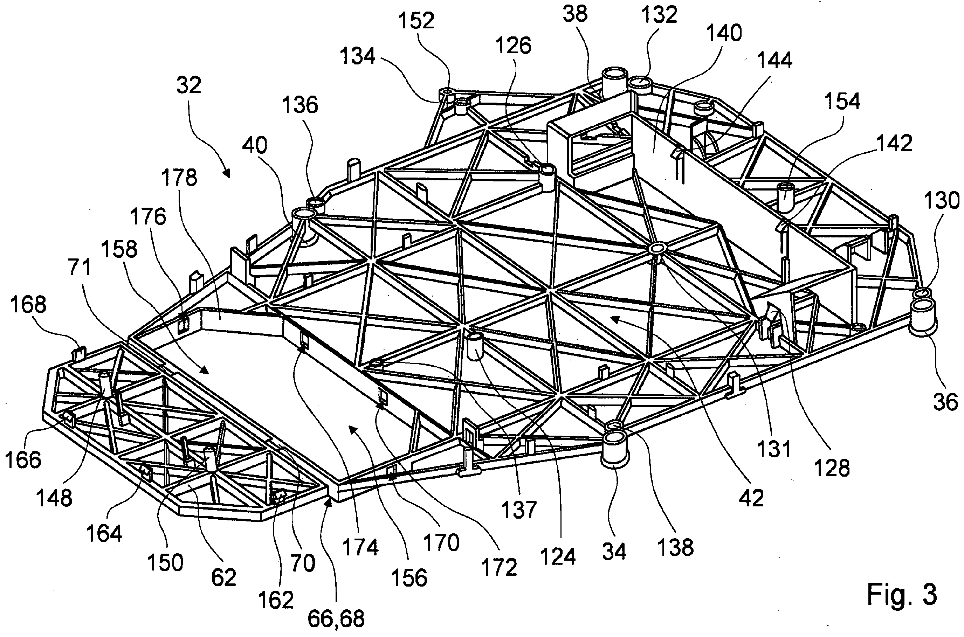

Die Kochfeldvorrichtung umfasst ferner eine Trägereinheit 32 (vgl. Figur 3), welche im montierten Zustand in der Einbaulage zu einer Halterung wenigstens einer Elektronikeinheit der Kochfeldvorrichtung (nicht dargestellt) vorgesehen ist. Die Halteeinheit 12 ist dazu vorgesehen, die Trägereinheit 32 im montierten Zustand und in der Einbaulage zu tragen. Die Halteeinheit 12 weist hierzu spezielle Befestigungselemente 106, 107, 108, 110, 111, 112, 114 auf. Die Befestigungselemente 106, 107, 108, 110, 111, 112, 114 sind als Gewindelöcher ausgebildet. Die Befestigungselemente 106, 107, 108, 110, 111, 112, 114 sind an der Grundplatte 94 angeordnet. Ferner ist die Halteeinheit 12 dazu vorgesehen, im montierten Zustand in der Einbaulage eine Kochfeldaußenabdeckung (nicht dargestellt) zu tragen. Hierzu umfasst die Halteeinheit 12 weitere Befestigungselemente 116, 118, 120, 122. Die weiteren Befestigungselemente 116, 118, 120, 122 sind als Gewindelöcher ausgebildet. Die weiteren Befestigungselemente 116, 118, 120, 122 sind an Flügeln angeordnet, welche an der Grundplatte 94 angeformt sind.

Figur 3 zeigt die Trägereinheit 32 der Kochfeldvorrichtung in einer isometrischen Einzeldarstellung. Die Trägereinheit 32 ist zumindest teilweise als ein Gitter ausgebildet, und zwar als ein Fachwerk. Die Trägereinheit 32 ist einstückig ausgebildet. Die Trägereinheit 32 besteht aus einem Kunststoff. Die Trägereinheit 32 weist einen Montagebereich 42 für die Elektronikeinheit auf. Bei der Elektronikeinheit handelt es sich um eine Leistungselektronikeinheit, welche zu einer Versorgung der Heizeinheiten 14, 16, 18, 20 mit einem hochfrequenten Wechselstrom vorgesehen ist. Die Elektronikeinheit umfasst zumindest einen Wechselrichter. In der Darstellung von Figur 3 ist die Elektronikeinheit im montierten Zustand von oben an der Trägereinheit 32 befestigt. Die Trägereinheit 32 umfasst Befestigungselemente 124, 126, 128 zu einer Befestigung der Elektronikeinheit. Die Befestigungselemente 124, 126 sind als Schraubdome ausgebildet. Das Befestigungselement 128 ist als ein Rasthaken mit Auflagefläche ausgebildet. Die Trägereinheit 32 umfasst ferner mit den Befestigungselementen 106, 107, 108, 110, 111, 112, 114 der Halteeinheit 12 korrespondierende Befestigungselemente 130, 131, 132, 134, 136, 137, 138 zu einer Befestigung der Trägereinheit 32 an der Halteeinheit 12. Die Befestigungselemente 130, 131, 132, 134, 136, 137, 138 sind als Schraublöcher ausgebildet. Die Trägereinheit 32 ist in der Orientierung gemäß Figur 3 an der Halteeinheit 12 in der Orientierung gemäß Figur 2 befestigt. Wie in einer Zusammenschau der Figuren 2 und 3 zu erkennen, ist der Montagebereich 42 im montierten Zustand auf einer von der Halteeinheit 12 abgewandten Seite der Trägereinheit 32 angeordnet. Ferner ist im montierten Zustand die Halteeinheit 12 zwischen den Heizeinheiten 14, 16, 18, 20 und der Elektronikeinheit angeordnet, so dass die Halteeinheit 12 Bauelemente der Elektronikeinheit, insbesondere den zumindest einen Wechselrichter, elektromagnetisch zumindest weitgehend von den Heizeinheiten 14, 16, 18, 20 abschirmt.

Die Trägereinheit 32 weist ferner ein Luftleitelement 140 zu einer Führung einer von einem Lüfter (nicht dargestellt) erzeugten Kühlluftströmung auf. Im Bereich des Luftleitelements 140 sind Rastelemente 142, 144 zu einer Fixierung eines Kühlkörpers der Elektronikeinheit (nicht dargestellt) vorgesehen. Durch das Luftleitelement 140 wird eine effektive Kühlluftströmung durch den Kühlkörper sichergestellt, wodurch eine effektive Kühlung der Elektronikeinheit, insbesondere des zumindest einen Wechselrichters, erreicht werden kann. Die Trägereinheit 32 umfasst ein Befestigungselement 152 zu einer Fixierung des Lüfters an der Trägereinheit 32. Das Befestigungselement 152 ist als ein Gewindeloch ausgebildet. Die Trägereinheit 32 weist ferner ein Befestigungselement 154 zu einer Befestigung eines Netzteils auf. Das Befestigungselement 154 ist als ein Schraubdom ausgebildet.

Die Trägereinheit 32 weist Fixierelemente 34, 36, 38, 40 auf, welche im montierten Zustand in der Einbaulage eine Horizontalposition der Heizeinheiten 14, 16, 18, 20 relativ zur Halteeinheit 12 festlegen. Für jede Heizeinheit 14, 16, 18, 20 umfasst die Trägereinheit 32 ein Fixierelement 34, 36, 38, 40. Die Fixierelemente 34, 36, 38, 40 sind jeweils zumindest im Wesentlichen zylinderförmig mit einer Verdickung an einem im montierten Zustand der Halteeinheit 12 zugewandten Ende ausgebildet.

Figur 4 zeigt einen Teil der Kochfeldvorrichtung mit einer an der Halteeinheit 12 montierten Trägereinheit 32 in einer Teilschnittdarstellung. Die Halteeinheit 12 umfasst Ausnehmungen 48, 50, 52, 54 (vgl. Figur 2), welche im montierten Zustand jeweils von einem der Fixierelemente 34, 36, 38, 40 durchstoßen sind. Die Ausnehmungen 48, 50, 52, 54 sind kreisförmig ausgebildet. Die Ausnehmungen 48, 50, 52, 54 sind derart bemessen und voneinander beabstandet, dass die Fixierelemente 34, 36, 38, 40, insbesondere deren Verdickungen, bei einer Montage des Kochfelds 58 durch die Ausnehmungen 48, 50, 52, 54 führbar sind, insbesondere gleichzeitig. Wie für das Fixierelement 36 beispielhaft in Figur 4 gezeigt, sind die Verdickungen der Fixierelemente 34, 36, 38, 40 im montierten Zustand in Halteausnehmungen 146 der Heizeinheit 14, 16, 18, 20 formschlüssig aufgenommen und fixieren diese im montierten Zustand in der Einbaulage horizontal relativ zur Halteeinheit 12.

Die Trägereinheit 32 umfasst ferner ein Elektronikträgerelement 62 zu einer Halterung einer Touch-Elektronikeinheit (nicht dargestellt) der Bedienerschnittstelle 92 (vgl. Figur 3). Das Elektronikträgerelement 62 weist Befestigungselemente 148, 150 zu einer Befestigung der Touch-Elektronikeinheit auf. Die Befestigungselemente 148, 150 sind als Schraubdome ausgebildet. Die Trägereinheit 32 umfasst ein Lager 66 zu einer geführten Bewegung des Elektronikträgerelements 62. Das Lager 66 ist als ein Schwenklager 68 ausgebildet und umfasst zwei Filmscharniere 70, 71. Die Figur 3 zeigt die Trägereinheit 32 in einer ersten Lagerstellung des Lagers 66. Die erste Lagerstellung des Lagers 66 ist zu einer Montage der Touch-Elektronikeinheit am Elektronikträgerelement 62 vorgesehen. In der ersten Lagerstellung des Lagers 66 ist die Touch-Elektronikeinheit in einem am Elektronikträgerelement 62 montierten Zustand auf der gleichen Seite der Trägereinheit 32 wie der Montagebereich 42 der Elektronikeinheit angeordnet. Benachbart zum Elektronikträgerelement 62 weist die Trägereinheit 32 einen Aufnahmebereich 156 für die Touch-Elektronikeinheit auf. Der Aufnahmebereich 156 ist als eine im montierten Zustand in einer zur Kochfeldplatte 10 senkrechten Richtung durchgehende Ausnehmung 158 ausgebildet. Die Halteeinheit 12 umfasst eine zur Ausnehmung 158 korrespondierende Ausnehmung 160 (vgl. Figur 2). Die Ausnehmung 160 ist in der Grundplatte 94 der Halteeinheit 12 angeordnet.

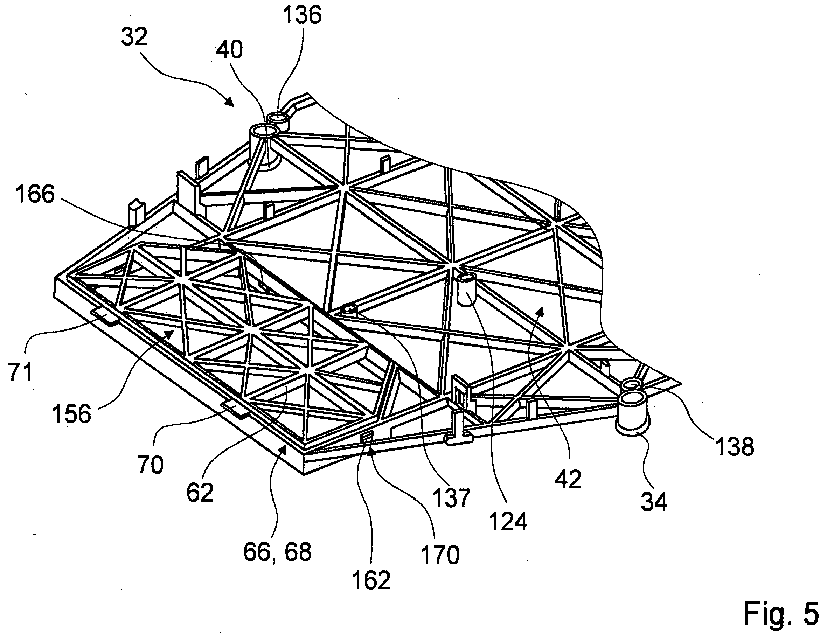

Figur 5 zeigt einen Teil der Trägereinheit 32 in einer zweiten Lagerstellung des Lagers 66. In der zweiten Lagerstellung des Lagers 66 ist das Elektronikträgerelement 62 um 180° gegenüber der ersten Lagerstellung des Lagers 66 geschwenkt. In der zweiten Lagerstellung des Lagers 66 ist das Elektronikträgerelement 62 dazu vorgesehen, die Touch-Elektronikeinheit in einer Betriebsposition zu halten. In der Betriebsposition ist die Touch-Elektronikeinheit im Aufnahmebereich 156 der Trägereinheit 32 angeordnet. Ferner durchdringt die Touch-Elektronikeinheit die Ausnehmung 160 der Halteeinheit 12. Berührund/oder Annäherungssensoren der Touch-Elektronikeinheit sind in der Betriebsposition gegen die Unterseite 93 der Kochfeldplatte 10 gedrückt (vgl. auch Figur 2). Das Elektronikträgerelement 62 umfasst Rasthaken 162, 164, 166, 168, welche in der zweiten Lagerstellung des Lagers 66 in korrespondierende Rastausnehmungen 170, 172, 174, 176 an einem den Aufnahmebereich 156 begrenzenden Rand 178 der Trägereinheit 32 eingreifen. Bei der ersten und der zweiten Lagerstellung des Lagers 66 handelt es sich jeweils um Endstellungen des Lagers 66.

Bei der Montage der Kochfeldvorrichtung wird zunächst die Halteeinheit 12 an die Unterseite 93 der Kochfeldplatte 10 angeklebt. Nach einem Aushärten eines Klebers werden die Heizeinheiten 14, 16, 18, 20 durch die seitlichen Ausnehmungen 24, 26, 28, 30 in einen Zwischenraum zwischen der Kochfeldplatte 10 und der Halteeinheit 12 eingeschoben. Die Halteausnehmungen 146 der Heizeinheiten 14, 16, 18, 20 werden anschließend mit den Ausnehmungen 48, 50, 52, 54 der Halteeinheit 12 in Deckung gebracht, woraufhin die Trägereinheit 32 an der Halteeinheit 12 befestigt wird. Dabei greifen die Fixierelemente 34, 36, 38, 40 der Trägereinheit 32 durch die Ausnehmungen 48, 50, 52, 54 der Halteeinheit 12 formschlüssig in die Halteausnehmungen 146 der Heizeinheiten 14, 16, 18, 20 ein und fixieren diese in der Einbaulage in horizontaler Richtung relativ zur Halteeinheit 12. Stromversorgungsleitungen (nicht dargestellt) der Heizeinheiten 14, 16, 18, 20 werden durch die seitlichen Ausnehmungen 24, 26, 28, 30 auf die der Trägereinheit 32 zugewandten Seite der Halteeinheit 12 geführt. In einem weiteren Schritt wird die Elektronikeinheit im Montagebereich 42 der Trägereinheit 32 montiert und mit den Heizeinheiten 14, 16, 18, 20 verkabelt. Ferner wird die Touch-Elektronikeinheit am Elektronikträgerelement 62 in der ersten Lagerstellung des Lagers 66 befestigt und mit der Elektronikeinheit verkabelt. Anschließend wird die Touch-Elektronikeinheit durch ein Überführen des Elektronikträgerelements 62 in die zweite Lagerstellung des Lagers 66 in die Betriebsposition versetzt. Des Weiteren werden sämtliche übrigen Komponenten, abgesehen von der Kochfeldaußenabdeckung, an die Trägereinheit 32 montiert, insbesondere das Netzteil und der Lüfter. Bevor die Kochfeldaußenabdeckung an die Halteeinheit 12 montiert wird, wird die verbleibende Verkabelung vorgenommen, insbesondere zwischen dem Netzteil und der Elektronikeinheit und der Elektronikeinheit und dem Lüfter.

Alternativ oder zusätzlich sind auch andere als die oben beschriebenen Befestigungselemente an einer Trägereinheit zu einer. Befestigung einer Elektronikeinheit und/oder einer Touch-Elektronikeinheit und/oder eines Netzteils und/oder eines Lüfters an der Trägereinheit denkbar. Ferner wären alternativ oder zusätzlich auch andere Befestigungselemente an einer Trägereinheit und/oder an einer Halteeinheit zu einer Befestigung der Trägereinheit und/oder einer Kochfeldaußenabdeckung an der Halteeinheit denkbar. Alternativ wären für eine Durchführung von Stromversorgungsleitungen von Heizeinheiten von einer ersten auf eine zweite Seite einer Halteeinheit auch separate Kabeldurchführungsöffnungen denkbar.

**Bezugszeichen**

| | | | |
|---|---|---|---|
| 10 | Kochfeldplatte | 70 | Filmscharnier |
| 12 | Halteeinheit | 71 | Filmscharnier |
| 14 | Heizeinheit | 72 | Oberseite |
| 16 | Heizeinheit | 74 | Markierung |
| 18 | Heizeinheit | 76 | Markierung |
| 20 | Heizeinheit | 78 | Markierung |
| 22 | Teil | 80 | Markierung |
| 24 | Seitliche Ausnehmung | 82 | Heizzone |
| 26 | Seitliche Ausnehmung | 84 | Heizzone |
| 28 | Seitliche Ausnehmung | 86 | Heizzone |
| 30 | Seitliche Ausnehmung | 88 | Heizzone |
| 32 | Trägereinheit | 90 | Induktorspule |
| 34 | Fixierelement | 92 | Bedienerschnittstelle |
| 36 | Fixierelement | 93 | Unterseite |
| 38 | Fixierelement | 94 | Grundplatte |
| 40 | Fixierelement | 96 | Seitenwand |
| 42 | Montagebereich | 98 | Seitenwand |
| 48 | Ausnehmung | 100 | Seitenwand |
| 50 | Ausnehmung | 102 | Seitenwand |
| 52 | Ausnehmung | 104 | Seitenwand |
| 54 | Ausnehmung | 106 | Befestigungselement |
| 58 | Kochfeld | 107 | Befestigungselement |
| 60 | Induktionskochfeld | 108 | Befestigungselement |
| 62 | Elektronikträgerelement | 110 | Befestigungselement |
| 66 | Lager | 111 | Befestigungselement |
| 68 | Schwenklager | 112 | Befestigungselement |
| 114 | Befestigungselement | 168 | Rasthaken |
| 116 | Befestigungselement | 170 | Rastausnehmung |
| 118 | Befestigungselement | 172 | Rastausnehmung |
| 120 | Befestigungselement | 174 | Rastausnehmung |
| 122 | Befestigungselement | 176 | Rastausnehmung |
| 124 | Befestigungselement | 178 | Rand |
| 126 | Befestigungselement | | |
| 128 | Befestigungselement | | |
| 130 | Befestigungselement | | |
| 131 | Befestigungselement | | |
| 132 | Befestigungselement | | |
| 134 | Befestigungselement | | |
| 136 | Befestigungselement | | |
| 137 | Befestigungselement | | |
| 138 | Befestigungselement | | |
| 140 | Luftleitelement | | |
| 142 | Rastelement | | |
| 144 | Rastelement | | |
| 146 | Halteausnehmung | | |
| 148 | Befestigungselement | | |
| 150 | Befestigungselement | | |
| 152 | Befestigungselement | | |
| 154 | Befestigungselement | | |
| 156 | Aufnahmebereich | | |
| 158 | Ausnehmung | | |
| 160 | Ausnehmung | | |
| 162 | Rasthaken | | |
| 164 | Rasthaken | | |
| 166 | Rasthaken | | |

## Patentansprüche

1. Kochfeldvorrichtung mit einer Kochfeldplatte (10), mit wenigstens einer in einem montierten Zustand an der Kochfeldplatte (10) unmittelbar befestigten Halteeinheit (12) und mit zumindest einer Heizeinheit (14, 16, 18, 20), welche in einer Einbaulage von der Halteeinheit (12) getragen und im montierten Zustand zwischen der Kochfeldplatte (10) und zumindest einem Teil (22) der Halteeinheit (12) angeordnet ist, **dadurch gekennzeichnet, dass** die Halteeinheit (12) zumindest eine seitliche Ausnehmung (24, 26; 28, 30) zu einer Montage und/oder Demontage der Heizeinheit (14) aufweist.

2. Kochfeldvorrichtung nach Anspruch 1, **gekennzeichnet durch** zumindest eine von der Halteeinheit (12) verschieden ausgebildete Trägereinheit (32), welche zumindest ein Fixierelement (34, 36, 38, 40) umfasst, das im montierten Zustand in der Einbaulage eine Horizontalposition der Heizeinheit (14, 16, 18, 20) relativ zur Halteeinheit (12) zumindest im Wesentlichen festlegt.

3. Kochfeldvorrichtung nach Anspruch 2, **dadurch gekennzeichnet, dass** die Trägereinheit (32) im montierten Zustand und in der Einbaulage durch die Halteeinheit (12) getragen ist.

4. Kochfeldvorrichtung nach Anspruch 2 oder 3, **dadurch gekennzeichnet, dass** die Trägereinheit (32) wenigstens einen Montagebereich (42) für zumindest eine Elektronikeinheit umfasst und dazu vorgesehen ist, im montierten Zustand und in der Einbaulage die Elektronikeinheit zu tragen.

5. Kochfeldvorrichtung nach Anspruch 4, **dadurch gekennzeichnet, dass** der Montagebereich (42) im montierten Zustand auf einer von der Halteeinheit (12) abgewandten Seite der Trägereinheit (32) angeordnet ist.

6. Kochfeldvorrichtung nach einem der Ansprüche 2 bis 5, **dadurch gekennzeichnet, dass** die Halteeinheit (12) wenigstens eine im montierten Zustand vom Fixierelement (34, 36, 38, 40) durchstoßene Ausnehmung (48, 50, 52, 54) aufweist.

7. Kochfeldvorrichtung nach einem der vorhergehenden Ansprüche, **dadurch gekennzeichnet, dass** die Halteeinheit (12) einstückig ausgebildet ist.

8. Kochfeldvorrichtung nach einem der vorhergehenden Ansprüche, **dadurch gekennzeichnet, dass** die Halteeinheit (12) dazu vorgesehen ist, im montierten Zustand wenigstens ein Bauelement einer Elektronikeinheit elektromagnetisch zumindest weitgehend von der Heizeinheit (14, 16, 18, 20) abzuschirmen.

9. Kochfeldvorrichtung nach einem der vorhergehenden Ansprüche, **dadurch gekennzeichnet, dass** die Halteeinheit (12) dazu vorgesehen ist, im montierten Zustand und in der Einbaulage eine Kochfeldaußenabdeckung zumindest teilweise zu tragen.

10. Kochfeld (58), insbesondere Induktionskochfeld (60), mit einer Kochfeldvorrichtung nach einem der Ansprüche 1 bis 9.

## Claims

1. Hotplate device with a hob (10), having at least one retaining unit (12) directly fixed to the hob (10) in an assembled state and having at least one heating unit (14, 16, 18, 20), which is supported by the retaining unit (12) in an installation position and in the assembled state is arranged between the hob (10) and at least one part (22) of the retaining unit (12), **characterised in that** the retaining unit (12) has at least one lateral cutout (24, 26, 28, 30) for assembly and/or disassembly of the heating unit (14).

2. Hotplate device according to claim 1, **characterised by** at least one support unit (32) which is variously formed by the retaining unit (12) and which comprises at least one fixing element (34, 36, 38, 40) which in the assembled state in the installation position at least substantially defines a horizontal position of the heating unit (14, 16, 18, 20) relative to the retaining unit (12).

3. Hotplate device according to claim 2, **characterised in that** the support unit (32) is supported by the retaining unit (12) in the assembled state and in the installation position.

4. Hotplate device according to claim 2 or 3, **characterised in that** the support unit (32) comprises at least one assembly region (42) for at least one electronics unit and is provided in order to support the electronics unit in the assembled state and in the installation position.

5. Hotplate device according to claim 4, **characterised in that** the assembly region (42) is in the assembled state arranged on a side of the support unit (32) facing away from the retaining unit (12).

6. Hotplate device according to one of claims 2 to 5, **characterised in that** the retaining unit (12) has at least one cutout (48, 50, 52, 54) penetrated in the assembled state by the fixing element (34, 36, 38, 40).

7. Hotplate device according to one of the preceding claims, **characterised in that** the retaining unit (12) is formed integrally.

8. Hotplate device according to one of the preceding claims, **characterised in that** the retaining unit (12) is provided in order in the assembled state at least largely to electromagnetically shield at least one component of an electronics unit from the heating unit (14, 16, 18, 20).

9. Hotplate device according to one of the preceding claims, **characterised in that** the retaining unit (12) is provided in order at least partially to support an exterior hob cover in the assembled state and in the installation position.

10. Hob (58), in particular induction hob (60), having a hotplate device according to one of claims 1 to 9.

## Revendications

1. Dispositif de champ de cuisson avec une plaque de champ de cuisson (10), avec au moins une unité de retenue (12) directement fixée à la plaque de champ de cuisson (10) à l'état monté et avec au moins une unité de chauffe (14, 16, 18, 20) supportée par l'unité de retenue (12) dans une position de montage et disposée entre la plaque de champ de cuisson (10) et au moins une partie (22) de l'unité de retenue (12) à l'état monté, **caractérisé en ce que** l'unité de retenue (12) présente au moins une cavité latérale (24, 26, 28, 30) pour un montage et/ou démontage de l'unité de chauffe (14).

2. Dispositif de champ de cuisson selon la revendication 1, **caractérisé par** au moins une unité de support (32) constituée distinctement par l'unité de retenue (12), laquelle englobe au moins un élément de fixation (34, 36, 38, 40) qui, à l'état monté en position de montage détermine au moins essentiellement une position horizontale de l'unité de chauffe (14, 16, 18, 20) par rapport à l'unité de retenue (12).

3. Dispositif de champ de cuisson selon la revendication 2, **caractérisé en ce que** l'unité de support (32) est supportée par l'unité de retenue (12) à l'état monté et en position de montage.

4. Dispositif de champ de cuisson selon la revendication 2 ou 3, **caractérisé en ce que** l'unité de support (32) englobe au moins une zone de montage (42) pour au moins une unité électronique et est prévue afin de supporter l'unité électronique à l'état monté et en position de montage.

5. Dispositif de champ de cuisson selon la revendication 4, **caractérisé en ce que** la zone de montage (42) est disposée à l'état monté sur un côté de l'unité de support (32) détourné de l'unité de retenue (12).

6. Dispositif de champ de cuisson selon l'une des revendications 2 à 5, **caractérisé en ce que** l'unité de retenue (12) présente au moins une cavité (48, 50, 52, 54) traversée par l'élément de fixation (34, 36, 38, 40) à l'état monté.

7. Dispositif de champ de cuisson selon l'une des revendications précédentes, **caractérisé en ce que** l'unité de retenue (12) est exécutée en une seule pièce.

8. Dispositif de champ de cuisson selon l'une des revendications précédentes, **caractérisé en ce que** l'unité de retenue (12) est prévue afin de protéger au moins largement, à l'état monté, au moins un composant d'une unité électronique de manière électromagnétique de l'unité de chauffe (14, 16, 18, 20).

9. Dispositif de champ de cuisson selon l'une des revendications précédentes, **caractérisé en ce que** l'unité de retenue (12) est prévue afin de supporter au moins partiellement à l'état monté et dans la position de montage une protection extérieure pour champ de cuisson.

10. Champ de cuisson (58), en particulier champ de cuisson à induction (60), avec un dispositif de champ de cuisson selon l'une des revendications 1 à 9.
